(19) Europäisches Patentamt / European Patent Office / Office européen des brevets

(11) **EP 2 277 420 B1**

(12) **EUROPEAN PATENT SPECIFICATION**

(45) Date of publication and mention
of the grant of the patent:
**08.04.2015 Bulletin 2015/15**

(51) Int Cl.:
*A47J 43/25* (2006.01)     *B23D 73/00* (2006.01)
*B23P 15/28* (2006.01)

(21) Application number: **10170619.0**

(22) Date of filing: **23.07.2010**

(54) **Formed or domed cutting teeth formed by improved double etching processes**

Mittels verbesserter Doppelätzverfahren geformte oder gewölbte Schneidezähne

Dents coupantes formées ou bombées formées par des procédés de gravure doubles améliorés

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **23.07.2009 US 213876 P
30.07.2009 US 213931 P
25.01.2010 US 336583 P**

(43) Date of publication of application:
**26.01.2011 Bulletin 2011/04**

(73) Proprietor: **Smith's Consumer Products, Inc.
Hot Springs, Arkansas 71913-8414 (US)**

(72) Inventors:
• **Smith, Richard S.
Hot Springs, AR 71912 (US)**
• **Chalfant, Louis
Hot Springs, AR 71901 (US)**

(74) Representative: **Chaillot, Geneviève et al
Cabinet Chaillot
16-20 Avenue de l'Agent Sarre
B.P. 74
92703 Colombes Cedex (FR)**

(56) References cited:
**DE-A1- 1 800 910     US-A- 1 845 522
US-A- 5 100 506     US-A1- 2009 133 587**

EP 2 277 420 B1

**Description**

**BACKGROUND OF THE INVENTION**

This application claims priority to provisional application S.N. 61/213,876 filed July 23, 2009, S.N. 61/213,931 filed July 30, 2009, and S. N. 61/336,583 filed January 25, 2010.

**Field of the Invention**

This invention relates to cutting and abrading devices and more particularly, to several embodiments of formed or domed style cutting teeth for cutting and abrading, and improved etching processes for manufacture thereof, which cutting teeth optionally can be coated for improved results.

**Summary of the Prior Art**

As a prior improvement in the formation of cutting elements from sheet material, cutting elements and the like have in the past been formed by double chemical etching processes. Known double etching processes produce cutting element that suffer from several deficiencies. One problem occurs because the cutting element produced by a double sided etch creates a step or wall that food contacts during cutting or slicing. This abutment results in a relative increase in the force needed to cut or slice the food item and the like. A single sided chemical etching process in the prior art was introduced to alleviate some of the deficiencies present in the formation of cutting teeth by the double etching process. A typical known single side etching process is disclosed in U.S. Patent No.5, 100,506 to Sturtevant et al. issued March 31, 1992. Although the cutting elements produced by a single side method such as disclosed in the foregoing Sturtevant patent reduces the force needed to move food through the cutting teeth as compared to similar teeth produced by prior double etch processes, the sharpness of teeth so produced do not attain an optimum cutting efficiency that is desirable along with an accompanying advantage in economy of manufacture. Further, the teeth formed by a single side etch process disadvantageously possess the same thickness as the base blank from which the cutting elements are formed.
Although low stick surfaces are applied to cooking elements and similar utensils, low stick resins are not applied to known cutting elements used in food processing. Coated cutters can provide highly desirable benefits. For example, the absence of such an applied layer of protection provided by the presence of a non-stick coating in the prior art subjects the cutting edge to dulling effects and fails to reduce friction during use. In the prior art non-stick surfaces are typically applied to a surface by spraying. The coating provided by spraying creates several deficiencies in use. In the prior art, a non-stick coating is disadvantageously applied after all forming operation to an element is formed. By coating the entire cutting element, the cutting edge is also coated producing a thicker profile and a less sharp edge. For these reasons, it is desirable in the prior art to provide a process for effectively coating cutting elements of a tool with a low frictional surface.

**SUMMARY OF THE INVENTION**

It is therefore an objective of the invention to provide improved cutting teeth and process of manufacture thereof for use in cutting and slicing ford items and the like in a wide range of implements, including graters, madolines, zesters and a wide range of other applications requiring efficient cutting elements. In a first, not claimed, embodiment, the cutting teeth of the invention have an improved cantilevered or bent tooth design, which are effectively manufactured by a process employing the double sided chemical etching technique of the invention. The cutting teeth as disclosed as the first embodiment of the invention reduce the force needed to cut food items and the like as a result of a reduction of the cutting thickness of the teeth and a substantial removal of the step or wall on the cutting teeth formed by known double sided etch processes, as described previously. In addition, the cutting teeth of the first embodiment of the invention attain an improved sharpness over teeth formed by prior standard single side etching processes. As result of the unique design of the teeth as manufactured in accordance with the invention, the cutting elements herein exceed the cutting capabilities of cutting teeth formed by both known double side etch techniques or prior art single side etching processes of manufacture. As a further benefit attained by the teachings of the invention, a more economical method of manufacture of cutting teeth is provided.
It is further an objective of the invention to provide a second embodiment of cutting teeth in accordance with the invention having a dome or formed style tooth design, and a process of manufacture thereof, for use in food graters and a wide range of other cutting and abrading implements. The second embodiment of the invention disclosed herein is directed to cutting tooth generally having an open dome configuration. The cutting edge formed on the dome teeth and is shown with a V-shaped leading profile such that the cutting edge can be formed by etching, grinding or any other sharpening process during manufactured by the double etching process. Although the dome teeth of the second embodiment herein are shown having a V-shaped leading edge, other leading edge shapes of the open dome may also be provided in accordance with the invention. The teeth formed by the invention reduce the force needed to cut as a result of a reduction of the cutting thickness of the teeth and a removal of the step or wall present on the cutting teeth formed by known double sided etch processes. In addition, the second embodiment of the invention not only attains improved sharpness than possible with cutters made by current double sided etch processes, but also reduces the force required for cutting required as compared to cutters produced by a known single side etch processes.

In the second embodiment of the invention an addition of shear to the dome tooth as disclosed herein effectively reduces the force associated with cutting during use. Without the V-shear in the dome tooth of the invention, the cutting elements of the invention also capable of reducing the force required for cutting due to its thinner edge relative to the base thickness. The cutter teeth of both embodiments of the invention eliminate food traps and are easier to clean, both features desirable in food applications. The dome cutting teeth herein of the second embodiment also exhibit enhanced strength and are more durable due to their design. As a further benefit attained by the teachings of the invention, the domed on formed style cutting teeth herein can be produced at a reduced cost compared to known elements. In addition to providing a reduction of the cost of manufacture due to the double etching process herein disclosed, the dome teeth of the second embodiment can tolerate the formation of greater variations of tooth height to allow higher tolerances in manufacture without affecting the overall function of the part.

It is still a further objective of the invention to provide the cutting elements and base herein disclosed with a coating through an improved process for use in a grater, zester, and the like. The coating is preferably in the form of a low stick resin, such as, for example, the material sold under the trademark Teflon or other suitable resin. The application of the low friction resin to the cutting element(s) and base is performed while the cutting edge portion of the cutting element is masked. To attain the foregoing result of the invention, a blank is chemically etched and then a non-stick resin is applied to the etched blank by silk-screening or a pad print process, while cutting edge(s) of the cutting element(s) are masked to prevent the application of a coating at the cutting edge. By masking the cutting edge portion, the optimum sharpness of the cutting edges of the formed cutting elements is maintained. The application of a non-stick surface on the cutting elements by the process herein disclosed along with providing optimum sharpened edges reduces the force needed to cut and grate, makes the cutting tool easier to clean, allows for multiple coloring of a steel or stainless steel element without painting, and reduces damage to the tool during handling in production. The successful application of a non-stick surface in accordance with the invention is accomplished through use of a screen printing process and/or pad print process.

An object, which is not claimed, of the invention is a cutting device for cutting items comprising

a base for receiving an item to be cut by movement along an axis generally parallel to said base,

said base having at least one raised cantilevered tooth integrally affixed to said base at a lower end and being disposed above said base,

said at least one tooth having an upper free end portion at having a shape defined by a lower etched cut-out portion and an upper etched cut-out portion, and

said lower etched cut-out portion and said upper etched cut-out portion end forming a thin cutting edge on said upper free end portion for cutting, and.

said upper etched cut-out portion creates an upper surface on said at least one cantilevered tooth disposed in generally spaced relation to the direction of movement of an item being cut to eliminate contact between said upper surface and the item being cut.

Preferably, said cutting edge portion is thinner than the thickness of the lower portion of said at least one cantilevered tooth.

Preferably, said at least one cantilevered tooth comprises a plurality of cantilevered teeth arranged in raised angular orientation on said base.

Preferably, said at least one cantilevered tooth is substantially coated with a low friction material with said cutting edge portion being uncoated by said low friction material.

Another object of the invention is a cutting device for cutting items comprising

a base for receiving an item to be cut for movement along an axis generally parallel to said base,

at least one cutting element being connected to said base in a raised orientation above an opening in said base,

said at least one cutting element having a generally domed configuration integrally attached to said base and forming an internal chamber above said base opening,

said at least one cutting element having a thickness less than said base and an upper leading edge forming a cutting edge disposed above an front opening in said cutting element leading into said internal chamber, and

said upper leading edge being disposed in confronting relationship to an item being cut.

Preferably, said upper leading edge has a generally V-shaped configuration formed by a cut-out portion on said dome.

Another object of the invention, which is not claimed, is a method of producing a cutting element from a base comprising the steps of

providing a base of metal for etching,

subjecting the top and bottom surface of said base to an etching chemical to etch material out of said blank adjacent to the cutting edge portion being formed on said cutting element,

said etching chemical creating upper and lower cut-out areas on said base to create the profile of a sharpening edge portion on said cutting element,

forming an upper surface in said upper cut-out area in a predetermined configuration,

mechanically forming said cutting tooth from said base such that the cutting tooth is angularly disposed on said base with said sharpening edge forming the free raised end of said cutting tooth, and

forming said predetermined configuration of said upper surface in a manner such that said upper surface is out of contact with items to be cut by said cutting tooth after being mechanically formed.

According to a particular embodiment, the method further comprises the step of

applying a coating of a non-stick resin to said base and said cutting tooth while masking said cutting edge portion to prevent the coating thereon before said step of mechanically forming sad tooth.

Another object of the invention is a method of producing a cutting element from a base comprising the steps of providing an base of blank material,

subjecting said base to an etching chemical to create the profile of at least one tooth and its cutting edge portion to be formed on said base,

applying a coat of a non-stick resin to said base and at least one cutting element while masking said cutting edge portion to prevent the application of a coating thereon,

and mechanically forming said cutting element out of said base in raised relationship.

Preferably, a plurality of said cutting teeth are formed on said base.

## BRIEF DESCRIPTION OF THE DRAWINGS

Fig. 1 is a partial vertical cross-section of an elevational view of a typical prior art cutting tooth formed by the a double side chemical etch process;

Fig. 2 is a partial vertical cross-section of an elevational view of a typical prior art cutting tooth formed by the a single side chemical etch process;

Fig. 3 is a partial vertical cross-sectional view along line III of Fig. 4 of an elevational view of a first, not claimed, embodiment of the invention directed to a cantilevered or formed cutting tooth manufactured by the double side chemical etching process of the invention;

Fig. 4 is a partial top plan view of a plurality of cantilevered cutting teeth of Fig. 3 formed from a base plate in accordance with the invention;

Fig. 5 is a top perspective view of a second embodiment of the invention directed cutting implement employing domed or formed style cutting teeth;

Fig. 6 is a partial top plan view of a cutting tooth shown in Fig. 5;

Fig. 7 is a partial side perspective view of the cutting teeth of Fig. 5;

Fig. 8 is an enlarged partial top plan view of the cutting teeth of Fig. 5, and

Fig. 9 is a schematic flow chart showing the process of the invention.

## DESCRIPTION OF THE PREFERRED EMBODIMENTS

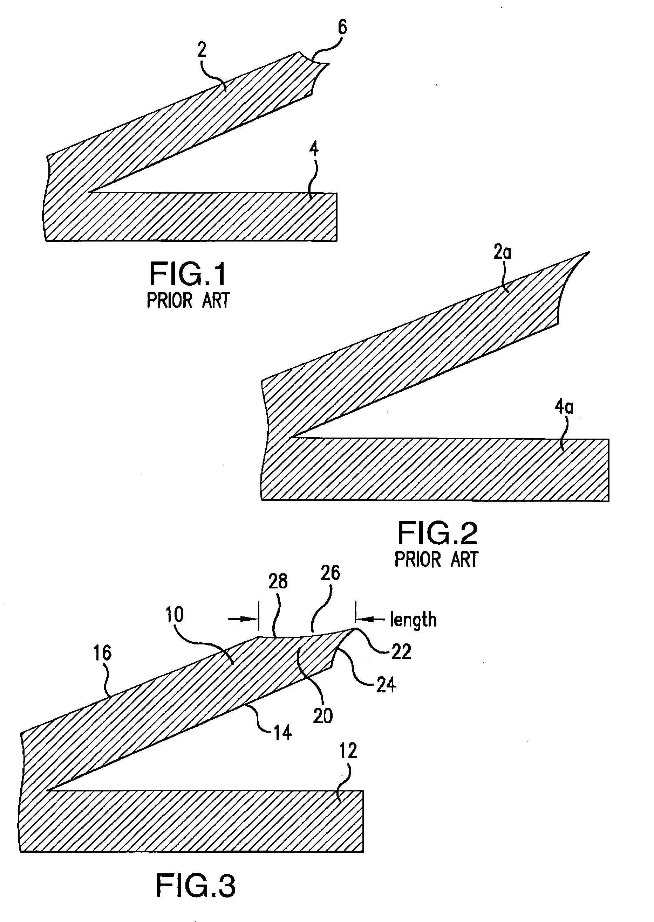

Referring now to Figs. 1, there is illustrated a cross-section view of a prior art cutting tooth 2 formed by known double side chemical etching processes angularly protruding from a base 4. Prior art teeth 2 are formed from a blank of metal, such as steel, through chemical etching applied to both sides of the blank through a well known method. As result of using prior double side etching techniques, a cross-section of the cutting element 2 of Fig. 1 is produced. In Fig. 1, an abutment surface or catch 6 is detrimentally formed on the body of tooth 10 which contacts food being cut to increase the force required for a cutting operation.

In Fig. 2, there is illustrated a cross-section view of a prior art cutting tooth 2a formed by a known single side etching process angularly arranged relative base surface 4a. Although the abutment surface of Fig. 1 is substantially eliminated, the teeth shown in Fig. 2 possess a thickness identical to the base plate and therefore a limited sharpness is achievable with a resulting reduction the relative efficiency of cutting.

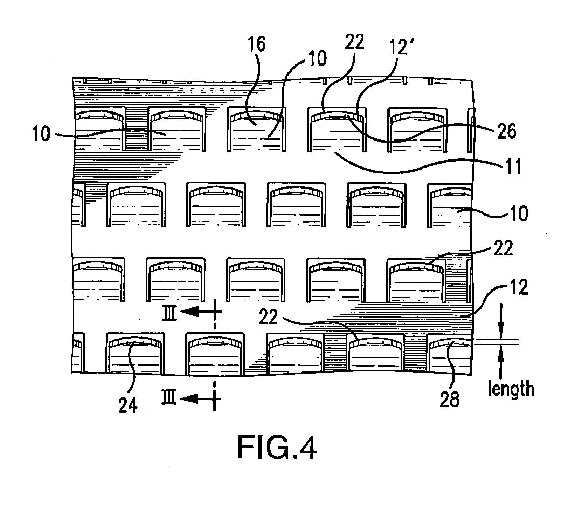

Referring to Figs. 3 and 4, there is illustrated a first embodiment of an improved cutting tooth 10 of the application intended to be a single cutting element or alternatively, arranged as an array of cutting teeth formed by a novel double side chemical etching method of the invention. The tooth 10 comprises a bent or cantilevered element angularly arranged in integral relationship at the lower end 11 of the tooth 10 to flat base 12. As seen in Fig. 4 each tooth 10 is raised as one of a plurality of bent or cantilevered cutting teeth angularly arranged with respect to base 12 above base opening 12'in a pattern of upward protruding elements. It should be apparent, however, that tooth 10 can also comprise a single cutting element of a cutting or slicing implement in selected applications of use. In accordance with the invention, a blank of metal, such as a stainless steel and or other metal, is treated prior to the etching action of a etching chemical in a manner to create a pattern of protective resist layers (not shown) on opposite surfaces 14 and 16 of blank 12 and define predetermined areas of exposed surfaces to be etched. The exposed areas of the metal blank are selectively etched so that the teeth 10 and base plate 12 are ultimately formed into the configuration shown in Figs. 3 and 4.

After etching, a cutting end portion 20 of tooth 10 is created having a unique configuration to provide a thin cutting edge 22 at the upper free end of tooth 10. The configuration of the cutting end portion 20 and the cutting edge 22 is defined by the material that is etched from the lower chemically cut-out area 24 of the tooth 10 and the material etched from the top of the tooth 10 to form cut-out area 26. The surface 28 of the cutting end portion 22 in the upper chemically cutout area 26 is shown in a concave shape forming a relatively gradual cut-out area. The length of the etched material in cutout area 26 is greater than the length of the cut-out area 24 and is determined by the thickness of tooth 10, the angle of tooth 10 with respect to base 12, and the amount of the material etched from upper cut out area 26. The extended surface 28 that is created by the length of cut out area 26 is spaced from the direction of the line of sight or contact with an item being moved past the cutting edge 22 such that impact of food with the surface 28 of tooth 10 during movement of food and the like past the cutting element 10 generally in a direction parallel to the upper surface of base 12 is eliminated. Thus, the interfering abutment wall or step during cutting operations ordinarily present in teeth produced by prior art etching processes is effectively eliminated. Thus, the combination of the thinner cutting tooth 10 and the foregoing removal of the interfering step or wall of the prior art in accordance with the teachings of the invention will reduce the cutting force needed to use implements employing the cutting teeth herein disclosed. The force required in use of cutting elements of the invention will be less than not only teeth formed by known double side etch processes, but also those cutting elements created by a single side etch of the prior art.

The length of the etched material in upper cutout area 26 of tooth 10 herein disclosed can be determined by the following equation:

$$6e\text{-}4(\% \text{ etch factor})\text{-}63e\text{-}5)*1e3)*(\text{Base metal thickness}))*(\text{tooth angle}^{\wedge}\text{-}.997)) = \text{length}$$

% etch factor=desired % etched from top side of cutting edge
Base metal thickness=initial thickness of metal used to produce the cutting surface
Tooth angle=the desired angle of tooth wanted
Length=the length of double sided etch on top of the tooth needed to remove step or wall from the line of sight of the cutting action of the cutter

The foregoing equation defines the minimum required length of the etched cutout area 26, but this length can be made longer than as provided by the foregoing equation to compensate for any material, process, tooling and any other production variations. As will be described later, the cantilevered cutting teeth and upper surface of base 12 can be coated with a non-stick resin in accordance with the invention.

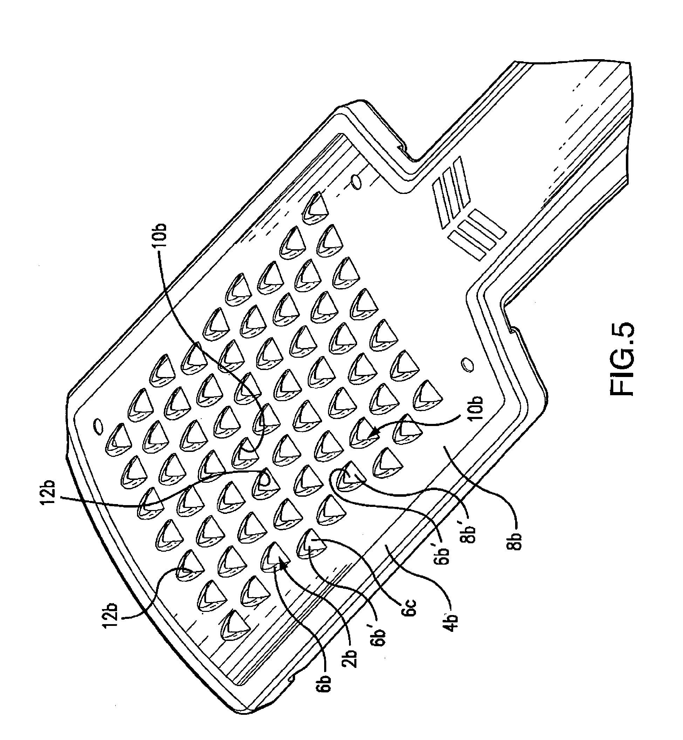

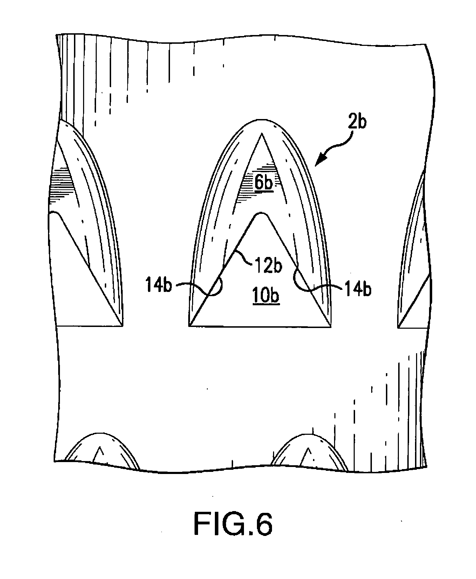

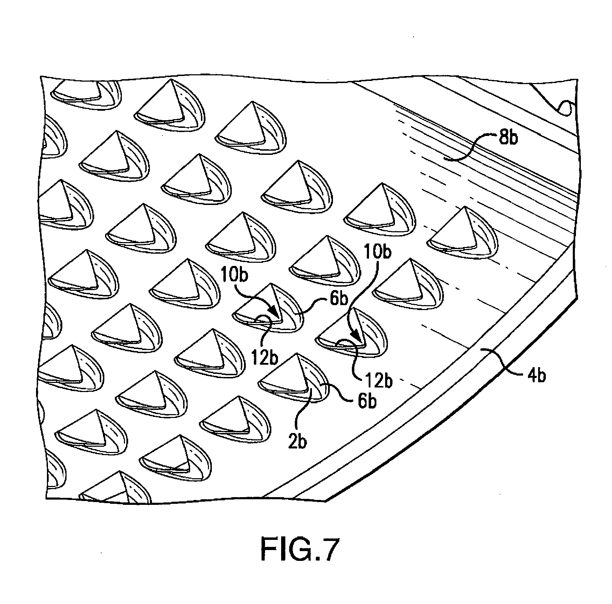

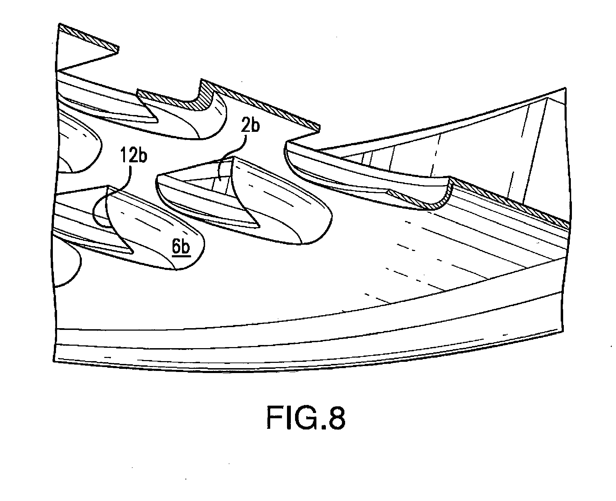

Referring now to Figs. 5-8, there is illustrated a second embodiment of the invention having domed or formed cutting teeth, generally designated by reference numeral 2b. In use the cutter tooth can be employed as a single cutting element or can comprise a plurality of cutting elements 2b' as shown, for example, when used with cutting implement 4b in Fig. 5. Domed cutting teeth 2b are formed from a blank of metal, such as steel, through a standard forming process in a well known manner to create a raised dome 6b integrally projecting in a raised orientation above base 8b and generally surrounding an internal cutter chamber 6c, except for a open leading opening in cutter 6b. The thickness of the dome formed is less than the thickness of base 8b. As best seen in Fig. 6, the top of the open end 6b' is formed with V-shaped cut-out area 10b which impacts the food or other items being moved past the tooth 2b. The chamber 6c is situated above holes 8b' in base 8b below teeth 2b to capture material which is cut after passing edge 10b. The top surface of a tooth 2b can be flat or taper away from the cutting surface.

A thin forward cutting edge is provided on substantially the entire extent of the V-shaped front edge portion 12b of the V-shaped cutout area 10b of the tooth 2b. The cutting edge 12b is thinner than the base blade and is formed out of dome 6b by etching. grinding or other technique. It is within the scope of the invention to form the leading edge 12b in any suitable configuration other than the V-shape as disclosed, such as a linear or curved leading edge, when desired in particular conditions. The combination of a thinner cutting edge, a stronger tooth configuration, and the addition of shear to the cutting edge attains more precise cuts than the prior art and the substantial elimination of food catches. The dome design of tooth 2b creates a more rigid design that will also hold better tolerances in the production process than known bent or cantilevered teeth in the prior art. Besides being used as a single cutting element of any size, width, thickness or pattern, a plurality of teeth 2b can also be of any size, width, thickness or pattern.

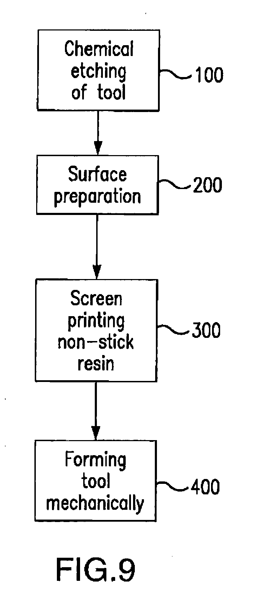

In the preceding embodiments described with reference to Figs. 1-8, the improved cutting teeth can be preferably formed by the invention of the application as hereinafter described. In addition, the method of manufacture can include the step of applying a non-stick protective resin prior to the forming process of the cutting teeth of the previously described embodiments. The application of the coasting to the cutting teeth 2 and 2b will provide the further advantages as previously described. Referring now to Fig. 9, the process of invention is shown to apply a non-stick resin to cutting elements of a tool, such as, but not limited to, a food zester, grater or any other tool employing cutting elements. Referring to block 100 of Fig. 9, a blank or base of a metal, such as, for example steel, stainless steel and the like, from which the cutting teeth are derived is first treated by being chemically etched to form the configuration of one or more cutting teeth, including their cutting edge profile. As previously described, the blank or base may be etched by the double etching technique described with reference to Figs. 1-4 herein. After being etched, the treated surface of the metal of the blank is roughened by a suitable known technique as described in block 200 for better adhesion of the non-stick resin to be applied. Although the foregoing step of treating the surface is disclosed as part of the process herein, it is within the scope of the invention to optionally omit the step of treating the surface, if desired. In block 300 of Fig. 9 showing the next step of the process of the invention, a non-stick resin is silk screened as a coating on the entire surface of the treated surface, which can be the top and/or bottom of the blank, but excluding application of the coating on the cutting surfaces of the tool. During the foregoing application of a coating by a known silk screen process, the cutting edge portion(s) of the cutting elements are masked to prevent the application of a coating on the cutting edge portion of the cutter to maintain its sharpness. Although this step of the process is described through use of silk screen printing, it is within the scope of the invention to alternately apply the non-stick resin using a pad print operation, photochemical etching and screen print or pad print process, a spray process, powder coating process or at typical titanium and the like process. In the step shown as block 400 of Fig. 1, after the non-stick resin is applied and cured, the configuration of the tool being manufactured, such as described with reference to Figs 3-8 can then be fully formed by mechanical techniques through standard presses without damaging the coated surface. From the foregoing it should be apparent that other shapes and designs of coated cutting elements can be manufactured in accordance with the invention other than those possessing the improved configuration of the embodiment herein disclosed.

## Claims

1. A method of producing a cutting element (2b) from a base (8b) comprising the steps of
   providing an base (8b) of blank material,
   subjecting said base (8b) to an etching chemical to create the profile of at least one tooth (2b) and its cutting edge portion (12b) to be formed on said base (8b),
   applying a coat of a non-stick resin to said base (8b) and at least one cutting element (2b) while masking said cutting edge portion (12b) to prevent the application of a coating thereon,
   and mechanically forming said cutting element (2b) out of said base (8b) in raised relationship.

2. The method according to Claim 1 wherein a plurality of said cutting teeth (2b) are formed on said base (8b).

## Patentansprüche

1. Verfahren zum Herstellen eines Schneidelements (2b) aus einem Grundelement (8b), das folgende Schritte umfasst:

   Bereitstellen eines Grundelements (8b) aus unbearbeitetem Material,
   In-Kontakt-Bringen des Grundelements (8b) mit einer Ätzchemikalie zum Erstellen des Profils von mindestens einem Zahn (2b) und seinem Schneidkantenabschnitt (12b), der an dem Grundelement (8b) zu formen ist,
   Aufbringen einer Schicht aus einem Kunststoff mit Antihaftwirkung auf das Grundelement (8b) und zumindest ein Schneidelement (2b), während gleichzeitig der Schneidkantenabschnitt (12b) abgedeckt wird, um das Aufbringen einer Beschichtung darauf zu verhindern,
   und mechanisches Herausformen des Schneidelements (2b) aus dem Grundelement (8b) in erhöhter Beziehung.

2. Verfahren nach Anspruch 1, bei dem eine Mehrzahl der Schneidzähne (2b) an dem Grundelement (8b) geformt werden.

**Revendications**

1. Procédé de production d'un élément coupant (2b) à partir d'une base (8b), comprenant les étapes consistant à :

   disposer une base (8b) de matériau d'ébauche,
   soumettre ladite base (8b) à un produit chimique de gravure pour créer le profil d'au moins une dent (2b) et de sa partie d'arête coupante (12b) devant être formées sur ladite base (8b),
   appliquer un revêtement d'une résine non-collante sur ladite base (8b) et au moins un élément coupant (2b) tout en masquant ladite partie d'arête coupante (12b) pour empêcher l'application d'un revêtement sur celle-ci,
   et mettre en forme mécaniquement ledit élément coupant (2b) à partir de ladite base (8b) dans une relation en saillie.

2. Procédé selon la revendication 1, dans lequel une pluralité desdites dents coupantes (2b) est formée sur ladite base (8b).

FIG.1
PRIOR ART

FIG.2
PRIOR ART

FIG.3

**FIG.4**

FIG.5

FIG.6

FIG.7

FIG.8

```
┌─────────────┐
│  Chemical   │
│   etching   │  ～100
│   of tool   │
└─────────────┘
       │
       ▼
┌─────────────┐
│   Surface   │  ～200
│ preparation │
└─────────────┘
       │
       ▼
┌─────────────┐
│   Screen    │
│  printing   │  ～300
│  non-stick  │
│    resin    │
└─────────────┘
       │
       ▼
┌─────────────┐
│   Forming   │
│    tool     │  ～400
│ mechanically│
└─────────────┘
```

# FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US SN61213876 A
- US SN61213931 A
- US SN61336583 A
- US 5100506 A, Sturtevant